# EUROPEAN PATENT SPECIFICATION

(11) **EP 4 394 006 B1**
(45) Date of publication and mention of the grant of the patent: **20.05.2026**
(21) Application number: 22886644.8
(22) Date of filing: 07.10.2022
(51) Int. Cl.: C09D 11/322, C09D 11/50, C09D 11/38, B41M 5/00, B41J 2/01, B41M 3/14

(54) **INK AND METHOD FOR READING IMAGE**
TINTE UND VERFAHREN ZUM LESEN EINES BILDES
ENCRE ET PROCÉDÉ DE LECTURE D'UNE IMAGE

(30) Priority: 27.10.2021 JP 2021175756
(43) Date of publication of application: 03.07.2024
(73) Proprietor: CANON KABUSHIKI KAISHA, Tokyo 146-8501 (JP)
(72) Inventor: YOSHIMASA, Yutaka, Tokyo 146-8501 (JP); SAITO, Hiroshi, Tokyo 146-8501 (JP); YAMABI, Satoshi, Tokyo 146-8501 (JP); OHASHI, Yoshihiro, Tokyo 146-8501 (JP); YAMAMOTO, Takeshi, Tokyo 146-8501 (JP)
(74) Representative: WESER & Kollegen Patentanwälte PartmbB
(86) International application number: PCT/JP2022/037575
(87) International publication number: WO 2023/074313

(56) References cited:
- JP-A- 2006 169 544
- JP-A- 2006 233 252
- JP-A- 2009 127 085
- JP-A- 2013 522 648
- JP-A- 2018 172 568
- JP-A- 2021 501 832

## Description

### Technical Field

The present disclosure relates to an ink and a method for reading images.

### Background Art

In recent years, "invisible printing" to embed invisible information in printed matter has attracted attention to enhance security, such as copyright protection and anti-counterfeiting. Invisible printing is expected to be applied in various fields, including the security field, because it is unlikely to degrade the appearance of visible images even when superimposed on the visible images, allowing embedded information to be used with the quality of normal printed matter maintained.

PTL 1 discloses that a toner containing specific gold nanorods can form invisible images without degrading the quality of visible images. Additionally, JP202151832 might be cited as prior art.

### Citation List

### Patent Literature

PTL 1: Japanese Patent Laid-Open No. 2007-219103
PTL 2: Japanese Patent Laid-Open No. 2009-127085
PTL 3: Japanese Patent Laid-Open No. 2006-118036
PTL 4: Japanese Patent Laid-Open No. 2006-169544

### Non Patent Literature

NPL 1: Chemistry of Materials, 2003, Vol. 15, pp. 1957-1962

### Summary of Invention

### Technical Problem

The present inventors examined the toner disclosed in PTL 1 and realized that the toner should be further improved in terms of the compatibility of image invisibility in the visible light region and image readability in the near-infrared region.

The ink jet recording method, which can easily record high-quality images, is one of the image recording methods that have been increasingly developed in recent years. Invisible printing in the security field is also required to be used on the spot, for example, for admission checks at events. Accordingly, the present inventors studied about ink jet invisible printing that can easily record high-quality images.

As a result, the present inventors identified that inks pose an issue in storage stability because inks require gold nanorods to be dispersed in liquids, unlike the toner disclosed in PTL 1, in which gold nanorods are dispersed in solids.

PTL 2 discloses a method for surface-treating gold nanorods to obtain dried gold nanorods that can be redispersed in water rather than to improve the storage stability of gold nanorods in liquids.

However, when the method for surface-treating gold nanorods disclosed in PTL 2 is applied to gold nanorods used in ink, the gold nanorods must be subjected to redispersion treatment when used as ink, leaving room for improvement in terms of usability. Thus, the dispersion of gold nanorods in ink should be stabilized to improve the storage stability of the ink.

Accordingly, an aspect of the present disclosure is directed to providing an ink that can form invisible images with excellent invisibility in the visible light region and excellent readability in the near-infrared region and has excellent storage stability.

Another aspect of the present disclosure is directed to providing a method for reading images formed with the ink disclosed herein.

### Solution to Problem

An aspect of the present disclosure provides an ink containing water, gold nanorods, and at least one surfactant selected from the group consisting of acetylene glycol-based surfactants with an HLB value of 15 or less and silicone surfactants with an HLB value of 15 or less,
wherein when the aspect ratio distribution of the gold nanorods is measured,
the aspect ratio distribution has an average µ of 6.0 to 13.0; and
the aspect ratio distribution has a standard deviation σ of 0.5 to 4.5.

Also, another aspect of the present disclosure provides a method for reading images, the method including reading an image formed with the ink disclosed herein with a device including a near-infrared sensor.

### Advantageous Effects of Invention

An aspect of the present disclosure can provide an ink that can form invisible images with excellent invisibility in the visible light region and excellent readability in the near-infrared region and has excellent storage stability.

Also, another aspect of the present disclosure can provide a method for reading images including reading an image formed with the ink disclosed herein with a device including a near-infrared sensor.

### Brief Description of Drawings

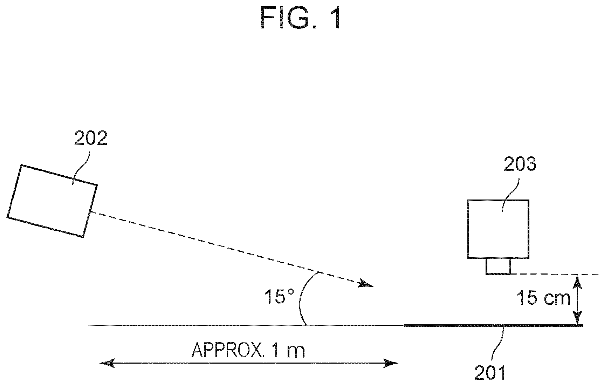

[Fig. 1] Fig. 1 is a schematic view illustrating the situation of image observation when image quality in the near-infrared region is evaluated.

### Description of Embodiments

The expressions representing numerical ranges, such as "a value or more and another or less" and "a value to another", refer to ranges including the lower and upper limits that are the endpoints, unless otherwise noted. When some numerical ranges are presented in steps, the lower and upper limits of the respective ranges may be combined as desired.

The ink according to the present disclosure is preferably an ink for forming invisible images.

### <Background to the Invention>

Using the gold nanorods disclosed in PTL 1 certainly can enhance the readability of images in the near-infrared region, even when used in inks. The present inventors, however, found that when the gold nanorod content is increased to enhance the readability of an image, the invisibility of the image tends to decrease. The present inventors suppose this is because the optical absorption spectrum of images recorded on recording media exhibits a maximum absorptance that is not sufficiently large in the near-infrared region compared to that in the visible light region. The present inventors suppose the thus increased gold nanorod content of the ink increases not only the maximum absorptance in the near-infrared region but also the maximum absorptance in the visible light region accordingly, reducing the invisibility of the image.

In addition, some of the inks containing gold nanorods are insufficient in terms of storage stability. This is probably because the storage stability of the gold nanorod dispersion itself is low.

The present inventors examined the above considerations and identified that an ink could achieve both high storage stability and the formation of images having above-described characteristics. The ink contains water, gold nanorods, and at least one surfactant selected from the group consisting of acetylene glycol-based surfactants with an HLB value of 15 or less and silicone surfactants with an HLB value of 15 or less, and when the aspect ratio distribution of the gold nanorods is measured, the aspect ratio distribution has an average µ of 6.0 to 13.0 with a standard deviation σ of 0.5 to 4.5.

It was found that controlling the average and standard deviation of the aspect ratios of the gold nanorods in the ink within the above ranges makes the peak of the optical absorption spectrum of images sharper and relatively increases the maximum absorptance in the near-infrared region. Thus, images with excellent invisibility and readability are likely to be produced even though the gold nanorod content of the ink is reduced.

Also, it was found that when an ink contains at least one surfactant selected from the group consisting of acetylene glycol-based surfactants with an HLB value of 15 or less and silicone surfactants with an HLB value of 15 or less, the dispersion of gold nanorods in the ink is stabilized, thus providing an ink with excellent storage stability.

The detailed mechanism of the gold nanorods dispersing stably in the ink is unknown, but the present inventors presume as follows.

In general, gold nanorods are synthesized in water in which a cationic surfactant, such as hexadecyltrimethylammonium bromide (CTAB), which is a quaternary ammonium salt, is dissolved. At this time, the cationic surfactant, such as CTAB, is adsorbed to the surfaces of the gold nanorods to form a double layer, thereby dispersing the gold nanorods in the water. However, the adsorption of the cationic surfactant, such as CTAB, is reversible, and molecular motion would easily cause the surfactant to desorb from the surfaces of the gold nanorods. When the liquid in which gold nanorods are to be synthesized contains at least one surfactant selected from the group consisting of acetylene glycol-based surfactants with an HLB value of 15 or less and silicone surfactants with an HLB value of 15 or less, the outer side of the double layer further adsorbs the surfactant. Probably, the desorption of the cationic surfactant, such as CTAB, from the surfaces of gold nanorods is thus reduced to improve the stability of the gold nanorod dispersion. The present inventors believe that the surfactants having the above properties, among various surfactants, function specifically in such a manner.

### <Gold Nanorods>

The ink contains gold nanorods. In the present disclosure, gold nanorods refer to metal nanorods mainly composed of gold. A metal nanorod mainly composed of gold contains gold in a proportion of 80% or more to the mass thereof.

A metal nanorod is a fine metal material made of noble metal, such as gold or silver, and has a longer axis and a shorter axis in the TEM image. In other words, metal nanorods in the TEM image are observed substantially as rectangles. Gold nanorods generally have shorter axes with a length of 1 nm to 60 nm and longer axes with a length of 20 nm to 500 nm. In the present disclosure, the average length of shorter axes of gold nanorods is preferably 3 nm to 20 nm and more preferably 5 nm to 10 nm. Also, the average length of longer axes of the gold nanorods is preferably 20 nm to 200 nm and more preferably 50 nm to 110 nm.

The value obtained by dividing the longer axis length of a metal nanorod by the shorter axis length is referred to as the aspect ratio. In the present disclosure, metal nanorods having aspect ratios of 1.5 or more are used as the gold nanorods. Gold nanorods exhibit two characteristic plasmon absorption bands (corresponding to the excitations of surface plasmon bands) derived from the longer and shorter axes of the rods, respectively. For example, the gold nanorods exhibit the absorption band derived from the shorter axis at around 530 nm and the absorption band derived from the longer axis at 650 nm to 2000 nm.

For the arrangement of gold and other metal elements in the individual gold nanorods, the gold nanorods may be in the form of an atomically combined alloy or in a core-shell form in which the nanorods of elemental gold are covered with another metal element. Also, the gold nanorods may be coated with, for example, an inert shell, such as silica or polystyrene. In addition, the surfaces of the gold nanorods may be modified with appropriate molecules, such as those of surfactant, according to the purpose, for example, for dispersing the gold nanorods in a medium.

### <Aspect Ratio Distribution of Gold Nanorods>

The aspect ratio of the gold nanorods in ink has a distribution, and the distribution is represented by the average and standard deviation of the aspect ratios. The distribution may be normal, skewed, or multi-peaked with multiple peaks.

The optical absorption spectrum of gold nanorods changes complexly with their changing aspect ratio distribution. The present inventors identified through their intensive study that the ink containing gold nanorods whose aspect ratio distribution, when measured, has
an average µ of 6.0 to 13.0 with a standard deviation σ of 0.5 to 4.5
is likely to form invisible images exhibiting excellent invisibility in the visible light region and excellent readability in the near-infrared region.

When the average µ is in the range of 6.0 to 13.0, images whose optical absorption spectrum has a peak at a wavelength in the range of 1000 nm to 1600 nm are easily obtained. When the average is less than 6.0, the peak position of the optical absorption spectrum tends to come close to the visible light region, and accordingly, some of the images can be insufficient in terms of invisibility. This is probably because such images easily absorb light with wavelengths in the visible light region. It was also found that when the average is more than 13.0, the peak of the optical absorption spectrum lies at an excessively long wavelength position in some cases, being likely to reduce readability with devices, such as an InGaAs camera, for reading wavelengths in the near-infrared region.

Accordingly, the average µ in the aspect ratio distribution is 6.0 or more, preferably 7.0 or more, and more preferably 8.0 or more. Also, the average µ is 13.0 or less, preferably 12.0 or less, and more preferably 11.0 or less. For example, a preferred range of the average µ may be 7.0 to 12.0, more preferably 8.0 to 11.0.

In addition, the present inventors found that when the standard deviation σ in the aspect ratio distribution is 4.5 or less, the absorption wavelength of the gold nanorods is less likely to vary in the near-infrared region, and the maximum absorptance in this region is relatively larger than the maximum absorptance in the visible light region.

Thus, invisible images with excellent invisibility and readability can be easily obtained. Accordingly, the standard deviation is 4.5 or less, preferably 3.5 or less, and more preferably 2.5 or less. The lower limit is not restricted, but the standard deviation σ is 0.5 or more.

A preferred range of the standard deviation σ may be, for example, 0.5 to 3.5, more preferably 0.5 to 2.5.

The average µ and the standard deviation σ can be controlled by adjusting reaction conditions and purification conditions.

### <Gold Nanorod Content>

The gold nanorod content of the ink is preferably 0.005% to 0.150% by mass relative to the total mass of the ink. When it is 0.005% by mass or more, invisible images with excellent readability in the near-infrared region can be easily obtained. From this viewpoint, it is preferably 0.005% by mass or more, more preferably 0.010% by mass or more. Also, when it is 0.150% by mass or less, coloration is difficult to see in the visible region, and the ink is likely to be consistently ejected from an ink jet recording head. From this viewpoint, it is preferably 0.150% by mass or less, more preferably 0.100% by mass or less.

### <Gold Nanoparticles>

In the present disclosure, gold nanoparticles, which are a type of nanomaterials mainly composed of gold, have aspect ratios of less than 1.5 in the TEM image. Hence, in the present disclosure, nanomaterials having aspect ratios of 1.5 or more are "gold nanorods", whereas gold nanomaterials having aspect ratios of less than 1.5 are "gold nanoparticles". Preferably, the gold nanoparticle content of the ink is 30% by number or less relative to the number of gold nanorods. Gold nanoparticles may be produced during the production of gold nanorods. Gold nanoparticles exhibit absorption in the visible light region according to their particle size. For example, gold nanoparticles of 20 nm in particle size absorb light at around 520 nm.

When the gold nanoparticle content is 30% by number or less relative to the number of gold nanorods, the optical absorptance of the gold nanoparticles in the visible light region, corresponding to their absorption wavelengths is small, and accordingly, images with excellent invisibility are likely to be produced. More preferably, such percentage is 15% by number or less, still more preferably 10% by number or less, and particularly 5% by number or less.

The percentage by number of gold nanoparticles can be controlled by reaction conditions and purification conditions, as will be described later.

### <Preparation of Gold Nanorods>

Gold nanorods can be synthesized, for example, by a method proposed by B. Nikoobakft and M. A. El-Sayed (NPL 1). More specifically, chloroauric acid (HAuCl₄) is reduced with ascorbic acid in an aqueous solution containing two surfactants (hexadecyltrimethylammonium bromide and benzyldimethylhexadecylammonium chloride.

Alternatively, the gold nanorod particles may be synthesized by reducing gold ions in an aqueous solution containing an excessive amount of a tetraammonium salt, cetyltrimethylammonium bromide (CTAB), as disclosed in PTLs 3 and 4. In this method, a CTAB aqueous solution is first added to an aqueous solution of chloroauric acid tetrahydrate, and sodium borohydride is added to prepare a solution containing seed particles. Into this solution, a mixed solution of silver nitrate, chloroauric acid tetrahydrate, L-ascorbic acid, and CTAB is added, followed by holding the resulting solution for a certain time, or the mixed solution is added in small amounts. Thus, seed particles acting as cores are easily grown anisotropically to obtain gold nanorods.

When the seed particles are grown, benzyldimethylhexadecylammonium chloride may be added to produce gold nanorods with large aspect ratios. Gold nanorods with large aspect ratios may also be produced in another process by reduction with a strong reducing agent, sodium borohydride, in the first stage and subsequent reduction with a weak reducing agent, triethylamine.

Also, the gold nanorods may be purified to adjust the aspect ratio distribution as needed before use. For the purification, any of the commonly known techniques may be used, and for example, density gradient ultracentrifugation may be applied. More specifically, mixed solutions with different concentrations containing sucrose and CTAB are first introduced into a centrifuge tube in a layered manner in order of concentration gradient. Then, a sample of gold nanorods is layered on top of the layers, followed by centrifugation for separation based on density and size. Such separation and purification reduce the standard deviation σ, producing gold nanorods with a narrower aspect ratio distribution.

### <Surfactant>

The ink contains at least one surfactant selected from the group consisting of acetylene glycol-based surfactants with an HLB value of 15 or less and silicone surfactants with an HLB value of 15 or less. Acetylene glycol-based surfactants with an HLB value of 15 or less include nonionic surfactants in a symmetrical structure with an acetylene group at the center. Preferably, an ethylene oxide group is added. Specific examples include Surfynol 104 (HLB value: 4), Surfynol 440 (HLB value: 8), and Surfynol 465 (HLB value: 13) (all produced by Nissin Chemical Industry); and Acetylenol series E40 (HLB value: 10), E60 (HLB value: 12), and E100 (HLB value: 14) (all produced by Kawaken Fine Chemicals).

Examples of silicone surfactants with an HLB value of 15 or less include siloxane-based surfactants having one or more ethylene oxide groups and/or one or more propylene oxide groups in a side chain and/or both ends of the polydimethylsiloxane chain. Specific examples include BYK-347 (HLB value: 9) and BYK-348 (HLB value: 11) (both trade names, produced by BYK Japan KK); and KF-351A (HLB value: 12), KF-352A (HLB value: 7), KF-353 (HLB value: 10), KF-355A (HLB value: 12), KF-615A (HLB value: 10), KF-945 (HLB value: 4), KF-640 (HLB value: 14), KF-642 (HLB value: 12), KF-643 (HLB value: 14), KF-6020 (HLB value: 4), X-22-4515 (HLB value: 5), KF-6011 (HLB value: 12), KF-6012 (HLB value: 7), KF-6015 (HLB value: 5), KF-6017 (HLB value: 5), and KF-6204 (HLB value: 10) (all produced by Shin-Etsu Chemical). These may be used individually or in combination.

The amount of the surfactant is preferably 0.01% to 1% by mass, more preferably 0.05% to 0.5%, relative to the total mass of the ink. When the amount of the surfactant is 0.01% by mass or more, dots are likely to spread sufficiently in terms of diameter. Also, when the amount of the surfactant is 1% by mass or less, the storage stability of the ink is further improved.

### <HLB value of Surfactant>

In the present disclosure, an HLB value implies the value obtained by the Griffin method. When two or more of the above-specified surfactants are used in combination, the weighted average of their HLB values is applied. The HLB value obtained by the Griffin method can be calculated from the equation "HLB value = 20 × (formula weight of the ethylene oxide group of surfactant) / (molecular weight of the surfactant). An HLB value obtained by the Griffin method is a physical property value representing the hydrophilicity or lipophilicity of a surfactant (compound) and lies from 0 to 20. The smaller the HLB value, the higher the lipophilicity; the larger the HLB value, the higher the hydrophilicity. When the HLB value is larger than 15, the storage stability of the ink may be reduced based on the presumed mechanism described above. The HLB value of the surfactant is preferably 5 or more. When the HLB value is 5 or more, dots are likely to spread sufficiently on the recording medium, further improving the uniformity of the printed matter. The HLB value obtained by the Griffin method is a physical property value of compounds with no ionic groups (nonionic compounds).

### <Aqueous Medium>

The ink is an ink containing water as an aqueous medium (aqueous ink). The water is preferably deionized water or ion exchanged water. The water content (% by mass) of the ink is preferably 50.00% to 99.00% by mass, more preferably 70.00% to 99.00% by mass, relative to the total mass of the ink. Also, the ink may further contain a water-soluble organic solvent as an aqueous medium. Any water-soluble organic solvent, such as alcohols, (poly)alkylene glycols, glycol ethers, nitrogen-containing polar solvents, and sulfur-containing polar solvents, may be used, provided that it is soluble in water. The water-soluble organic solvent content (% by mass) of the ink is preferably 1.00% to 30.00% by mass, more preferably 3.00% to 20.00% by mass, relative to the total mass of the ink. When the water-soluble organic solvent content is in such a range, the surfactant, such as CTAB, on the gold nanorods is less likely to desorb, further stabilizing the dispersion of the gold nanorods in the ink. In addition, reliability, for example, sticking resistance and ejection consistency, is further enhanced.

### <Additives>

The ink may optionally contain various additives, such as surfactants other than the above-specified surfactant, pH adjusters, surface slipping agents, rust preventives, preservatives, antifungal agents, antioxidants, reduction inhibitors, evaporation accelerators, and chelating agents. Preferably, the ink according to the present disclosure does not contain coloring components that make printed images visible.

### <Recording Medium>

Any known recording media can be used, but preferably, ink-permeable recording media, such as those with an ink receiving layer (glossy paper or PET films with a receiving layer), are used.

### <Optical Absorptance in Visible Light Region>

In a spectral analysis of a solid image formed with the ink according to the present disclosure at an application rate of 1.9 mg/cm², the maximum optical absorptance in the wavelength range of 400 nm to 800 nm is preferably 10% or less. This wavelength range corresponds to the visible region. When the optical absorptance in this region is 10% or less, the image is practically unrecognizable to the naked eye, and thus, images with excellent invisibility in the visible light region can be obtained.

### <Optical Absorptance in Near-Infrared Region>

Also, in a spectral analysis of a solid image formed with the ink at an application rate of 1.9 mg/cm², the maximum optical absorptance in the wavelength range of 900 nm to 1800 nm is preferably 5% or more. This wavelength range corresponds to the near-infrared region. When the optical absorptance in this region is 5% or more, the invisible image is easily read with a near-infrared camera, such as an InGaAs camera. More preferably, the optical absorptance in this region is 10% or more.

When the ink is used as an invisible ink in practice, the optical absorption in the invisible region can be visualized by using a camera or other devices including a sensor sensitive to 900 nm to 1800 nm (e.g., InGaAs sensor).

The optical absorptance in the visible light region and the near-infrared region can be controlled by adjusting the aspect ratio distribution of the gold nanorods.

### <Method for Reading Images>

The images formed with the ink according to the present disclosure may be read by any method without limitation. The images formed with the ink according to the present disclosure easily absorb wavelengths in the near-infrared region and are, accordingly, preferably read using a device including a near-infrared sensor. More preferably, a device including an InGaAs sensor is used, and still more preferably, an InGaAs camera is used. Also, the method for reading images preferably uses light with wavelengths of 900 nm to 2500 nm, more preferably, 900 nm to 1800 nm.

### <Process for Producing Ink>

The ink according to the present disclosure may be produced by common ink production methods, provided that the method uses gold nanorods exhibiting an aspect ratio distribution with the above-specified average µ and standard deviation σ and a surfactant with the above-specified HLB value. More specifically, the ink can be produced through steps: (1) preparing the above-specified gold nanorods; and (2) mixing ink constituents including the gold nanorods and the above-specified surfactant. Step (1) can be performed according to the above-described process for producing gold nanorods.

If necessary, a purification step for purifying the gold nanorods may be performed between steps (1) and (2) to increase the gold nanorod content of the gold nanorod dispersion liquid.

### <Property Measurements and the Like>

Physical properties are measured as follows.

### <Quantitative Determination of Metal Content of Metal Nanorod Dispersion Liquid>

The metal content of the metal nanorod dispersion liquid can be quantitatively determined by ICP emission spectrometry according to JIS K 0116-2014. First, a metal nanorod dispersion liquid is heated to 60°C on a hot plate for drying and solidification. Then, aqua regia is added to the resulting dispersion liquid, and microwave acid digestion is performed using ETHOS PRO (manufactured by Milestone General K. K.) or the like. The liquid is subjected to ICP emission spectral analysis with CIROS CCD (manufactured by SPECTRO). The metal content thus can be quantitatively determined.

### <Measurement of Aspect Ratio Distribution of Gold Nanorods in Ink>

For measuring the aspect ratio distribution of gold nanorods in the ink, first, the gold nanorods are isolated from the ink and collected.

In the procedure, the gold nanorods in the ink are first settled by centrifugation, followed by removing the supernatant liquid. A solvent is newly added to the dispersion liquid containing the gold nanorods from which the supernatant liquid has been removed, and centrifugation is performed again, followed by removing the supernatant liquid. This operation is repeated several times for cleaning, and the solvent is finally removed, thus isolating and collecting the gold nanorods from the ink. The collected gold nanorods are dispersed again in a solvent such as THF and taken as a measurement sample.

The measurement sample dispersed in the solvent is dropped onto a support film, dried, and subjected to TEM observation under a transmission electron microscope, such as "Technai F30 (manufactured by FEI)". The longer and shorter axes of the observed gold nanorods are determined by image processing software such as Photoshop, thus obtaining the average and standard deviation of the aspect ratio distribution and the average length of longer axes of the gold nanorods.

### <Measurement of Percentage by Number of Gold Nanoparticles to Gold Nanorods in Ink>

The percentage by number of the gold nanoparticles to the gold nanorods in the ink can be measured by counting the numbers of gold nanoparticles and gold nanorods in the above-described TEM observation and calculating their proportion.

### <Measurement of Gold Nanorod Content of Ink>

The gold nanorod content (% by mass) of the ink is measured by X-ray fluorescence analysis. This measurement is performed in accordance with JIS K 0119-1969 and specifically as follows.

In the measurement, a wavelength dispersive X-ray fluorescence analyzer, "Axios" (manufactured by PANalytical), and software for setting measurement conditions and measured data analysis dedicated to the analyzer, "Super Q ver. 4.0F" (manufactured by PANalytical), are used. In the measurement, the anode of the X-ray tube is Rh; measurement atmosphere, vacuum, measurement diameter (collimator mask diameter), 27 mm; and measurement time, 10 s. In measurements, light elements are detected with a proportional counter (PC), and heavy elements are detected with a scintillation counter (SC).

Samples prepared by applying 4 mL of ink onto a glass substrate to a diameter of 39 mm and drying the ink are used as the measurement sample.

Samples are measured under the above-described conditions. Elements are identified based on the X-ray peak positions obtained, and the counting rate (unit: kcps), which is the number of X-ray photons per unit time, is measured. The gold nanorod content of the ink is then calculated using a calibration curve prepared separately. For preparing the calibration curve, samples prepared in the same manner as described above using inks each containing a predetermined amount of gold nanorods are used as measurement samples.

### <Ink Cartridge>

The ink of the present disclosure may be accommodated in an ink cartridge. The ink cartridge includes an ink and an ink container to contain the ink. The ink in the ink container is the above-described ink of the present disclosure. The ink container may be in the form of an absorber that holds the entire amount of the ink to be contained. Also, the ink container may be such that it can accommodate the entire amount of ink in a liquid form without having absorbers. The ink cartridge may have a structure including an ink container and an ink jet recording head.

### <Ink Jet Recording Method>

The ink of the present disclosure may be used in an ink jet recording method. In the ink jet recording method, the above-described ink of the present disclosure is ejected from an ink jet recording head to record images on a recording medium. For ejecting the ink, mechanical energy or thermal energy may be applied to the ink. In the present invention, a method of thermal energy application to the ink is particularly preferably used for ink ejection. The steps of the ink jet recording method can be the same as those of known ink jet recording methods, except for using the ink of the present disclosure.

Preferably, the application rate of ink onto the recording medium is 3.0 mg/cm² or less, more preferably 2.5 mg/cm² or less, from the viewpoint of drying the ink applied onto the recording medium.

### EXAMPLES

The present disclosure will be further described in detail with reference to Examples, but the disclosure is not limited by the following Examples. The measurement results in the examples were obtained by the above-described measurement methods.

### [Preparation Example of Gold Nanorod Dispersion Liquid A]

First, a solution of seed particles was prepared. Specifically, 500 mL of 0.0005 mol/L aqueous solution of chloroauric acid tetrahydrate (produced by Kishida Chemical) and 500 mL of 0.2 mol/L aqueous solution of cetyltrimethylammonium bromide (produced by Kishida Chemical) were mixed. Into this aqueous solution, 60 mL of 0.01 mol/L sodium borohydride (produced by Tokyo Chemical Industry) was added to yield a seed particle solution (Solution A).

Subsequently, 10 g of cetyltrimethylammonium bromide was dissolved in 500 mL of 0.15 mol/L aqueous solution of benzyldimethylhexadecylammonium chloride (produced by Tokyo Chemical Industry). Into this solution containing two surfactants, 20 mL of 0.004 mol/L silver nitrate aqueous solution was added. Into the resulting aqueous solution, 500 mL of 0.001 mol/L chloroauric acid tetrahydrate aqueous solution was added, and 7 mL of 0.078 mol/L L-ascorbic acid aqueous solution (produced by Kishida Chemical) was further added. The resulting solution was taken as Solution B.

Subsequently, 10 g of cetyltrimethylammonium bromide was dissolved in 500 mL of 0.15 mol/L aqueous solution of benzyldimethylhexadecylammonium chloride (produced by Tokyo Chemical Industry). Into this solution containing two surfactants, 20 mL of 0.004 mol/L silver nitrate aqueous solution was added. Into the resulting aqueous solution, 500 mL of 0.0005 mol/L chloroauric acid tetrahydrate aqueous solution was added, and 3.6 mL of 0.078 mol/L L-ascorbic acid aqueous solution (produced by Kishida Chemical) was further added. The resulting solution was taken as Solution C.

Into Solution B, 1.2 mL of Solution A was added, and, subsequently, 2.0 mL of Solution C was added at a rate of 1.0 mL/20 minutes, thus anisotropically growing seed particles as cores. After centrifugation at 10,000 × g for 5 minutes, the gold nanorods were dispersed again in water to a content of 0.35% by mass to yield a gold nanorod dispersion liquid (Dispersion Liquid A). Table 1 presents the physical properties of gold nanorods in Dispersion Liquid A.

### [Preparation Example of Gold Nanorod Dispersion Liquids B to J]

Dispersion Liquids B to J were prepared by the same operations as in the preparation example of Gold Nanorod Dispersion Liquid A, except that the amount of Solution C and whether the following purification process was applied were changed, as shown in Table 1.

### <Purification Step>

The resulting gold nanorod dispersion liquid in 6 mL was centrifuged at 10000 × g for 5 minutes, and the resulting pellets were suspended again in 0.05 mL of 0.01 M CTAB aqueous solution to yield a gold nanorod suspension liquid. Also, sucrose was added to 0.01 M CTAB solutions to prepare solutions containing 10% by mass, 15% by mass, 20% by mass, and 25% by mass of sucrose, respectively. These solutions containing sucrose, each in 3 mL, were placed in a layering manner in a 15 mL polyallomer tube in descending order of sucrose concentration, and the gold nanorod suspension liquid was finally layered. Then, the resulting sample was centrifuged at 25°C and 10750 × g for 15 minutes using a high-speed cooling centrifuge Avanti JXN-30. After centrifugation, the sample was divided into 300 µL fractions, and TEM images of the fractions containing gold nanorods were observed. Fractions whose TEM image derived aspect ratios with a desired average µ and standard deviation σ were centrifuged at 10000 × g for 5 minutes, and the resulting sediment, that is, gold nanorods, was collected. The collected gold nanorods were dispersed again in water to a content of 0.35% by mass.

### [Table 1]

**Table 1**

| | Solution C (mL) | Purification step | Average µ | Standard deviation σ | Average length of longer axes (nm) | Percentage by number of gold nanoparticles |
|---|---|---|---|---|---|---|
| Dispersion liquid A | 2.0 | N/A | 6.0 | 3.5 | 52 | 17 N% |
| Dispersion liquid B | 2.0 | Applied | 6.0 | 1.0 | 53 | Less than 1 N% |
| Dispersion liquid C | 25.0 | N/A | 13.0 | 4.5 | 112 | 23 N% |
| Dispersion liquid D | 5.0 | N/A | 7.0 | 3.5 | 64 | 21 N% |
| Dispersion liquid E | 22.0 | Applied | 12.0 | 1.5 | 109 | Less than 1 N% |
| Dispersion liquid F | 8.0 | Applied | 8.0 | 1.5 | 70 | Less than 1 N% |
| Dispersion liquid G | 12.0 | Applied | 9.0 | 2.5 | 77 | Less than 1 N% |
| Dispersion liquid H | 18.0 | Applied | 11.0 | 1.5 | 102 | Less than 1 N% |
| Dispersion liquid I | 0 | N/A | 5.5 | 5.0 | 51 | Less than 1 N% |
| Dispersion liquid J | 28.0 | N/A | 14.0 | 5.0 | 125 | Less than 1 N% |

In Table 1, "average length of longer axes" refers to the average length of longer axes of the gold nanorods in the ink. Also, "percentage by number of gold nanoparticles" refers to the percentage of the number of gold nanoparticles to the number of gold nanorods in the ink.

### [Production Example of Ink 1]

The following constituents were mixed and sufficiently stirred, and the resulting mixture was subjected to pressure filtration through a microfilter with a pore size of 3.0 µm (manufactured by Fujifilm) to yield Ink 1. The "balance" of ion exchanged water is an amount that makes the total amount of the constituents in the ink 100.0%.
- Gold Nanorod Dispersion Liquid A: 29%
- Surfactant (trade name: Acetylenol AE60): 0.2%
- Ethylene glycol: 10%
- Ion exchanged water: balance

### [Production Example of Inks 2 to 29]

Inks 2 to 29 were produced by the same operations as in the production example of Ink 1, except for changes presented in Tables 2 to 4. The surfactants presented in Tables 2 to 4 are detailed as follows:

### <Surfactants>

- AE60: trade name "Acetylenol E60" (produced by Kawaken Fine Chemical) (HLB value: 12)
- AE40: trade name: "Acetylenol E40" (produced by Kawaken Fine Chemical) (HLB value: 10)
- AE100: trade name: "Acetylenol E100" (produced by Kawaken Fine Chemical) (HLB value: 14)
- KF945: trade name "KF-945" (produced by Shin-Etsu Chemical) (HLB value: 4)
- KF6015: trade name "KF-6015" (produced by Shin-Etsu Chemical) (HLB value: 5)
- KF6204: trade name "KF-6204" (produced by Shin-Etsu Chemical) (HLB value: 10)
- BYK348: trade name "BYK-348" (produced by BYK Japan KK) (HLB value: 11)
- KF642: trade name "KF-642" (produced by Shin-Etsu Chemical) (HLB value: 12)
- KF640: trade name "KF-640" (produced by Shin-Etsu Chemical) (HLB value: 14)
- AE200: trade name: "Acetylenol E200" (produced by Kawaken Fine Chemical) (HLB value: 16)
- KF354L: trade name "KF-354L" (produced by Shin-Etsu Chemical) (HLB value: 16)
- Emulgen 105: trade name "Emulgen 105" (produced by Kao) (HLB value: 10)
- Megafac F-444: trade name "Megafac F-444" (produced by DIC Corporation) (HLB value: 9)

AE60, AE40, AE100, and AE200 are all acetylene glycol-based surfactants. Also, KF945, KF6015, KF6204, BYK348, KF642, KF640, and KF354L are all silicone surfactants. Emulgen 105 is a polyoxyalkylene alkyl ether-based surfactant. Megafac F-444 is a fluorosurfactant.

### [Table 2]

**Table 2**

| Example No. | | 1 | 2 | 3 | 4 | 5 | 6 | 7 | 8 | 9 | 10 | 11 | 12 |
|---|---|---|---|---|---|---|---|---|---|---|---|---|---|
| Ink No. | | 1 | 2 | 3 | 4 | 5 | 6 | 7 | 8 | 9 | 10 | 11 | 12 |
| Gold nanorods dispersion liquid | Dispersion liquid A | 29 | | | | | | | | | | | |
| | Dispersion liquid B | | 29 | | | | | | | | | | |
| | Dispersion liquid C | | | 29 | | | | | | | | | |
| | Dispersion liquid D | | | | 29 | | | | | | | | |
| | Dispersion liquid E | | | | | 29 | | | | | | | |
| | Dispersion liquid F | | | | | | 29 | | | 11 | 6 | 86 | 91 |
| | Dispersion liquid G | | | | | | | 29 | | | | | |
| | Dispersion liquid H | | | | | | | | 29 | | | | |
| | Dispersion liquid I | | | | | | | | | | | | |
| | Dispersion liquid J | | | | | | | | | | | | |
| Surfactant | AE60 | 0.2 | 0.2 | 0.2 | 0.2 | 0.2 | 0.2 | 0.2 | 0.2 | 0.2 | 0.2 | 0.2 | 0.2 |
| | AE40 | | | | | | | | | | | | |
| | AE100 | | | | | | | | | | | | |
| | KF945 | | | | | | | | | | | | |
| | KF6015 | | | | | | | | | | | | |
| | KF6204 | | | | | | | | | | | | |
| | BYK348 | | | | | | | | | | | | |
| | KF642 | | | | | | | | | | | | |
| | KF640 | | | | | | | | | | | | |
| | AE200 | | | | | | | | | | | | |
| | KF354L | | | | | | | | | | | | |
| | Emulgen 105 | | | | | | | | | | | | |
| | Megafac F-444 | | | | | | | | | | | | |
| Water-soluble organic solvent | Ethylene glycol | 10 | 10 | 10 | 10 | 10 | 10 | 10 | 10 | 10 | 10 | 10 | 10 |
| | Glycerin | | | | | | | | | | | | |
| Ion exchanged water | | Balance | Balance | Balance | Balance | Balance | Balance | Balance | Balance | Balance | Balance | Balance | Balance |

### [Table 3]

**Table 3**

| Example No. | | 13 | 14 | 15 | 16 | 17 | 18 | 19 | 20 | 21 | 22 | 23 |
|---|---|---|---|---|---|---|---|---|---|---|---|---|
| Ink No. | | 13 | 14 | 15 | 16 | 17 | 18 | 19 | 20 | 21 | 22 | 23 |
| Gold nanorods dispersion liquid | Dispersion liquid A | | | | | | | | | | | |
| | Dispersion liquid B | | | | | | | | | | | |
| | Dispersion liquid C | | | | | | | | | | | |
| | Dispersion liquid D | | | | | | | | | | | |
| | Dispersion liquid E | | | | | | | | | | | |
| | Dispersion liquid F | 29 | 29 | 29 | 29 | 29 | 29 | 29 | 29 | 29 | 29 | 29 |
| | Dispersion liquid G | | | | | | | | | | | |
| | Dispersion liquid H | | | | | | | | | | | |
| | Dispersion liquid I | | | | | | | | | | | |
| | Dispersion liquid J | | | | | | | | | | | |
| Surfactant | AE60 | | | | | | | | | 2 | 0.2 | |
| | AE40 | 0.2 | | | | | | | | | | |
| | AE100 | | 0.2 | | | | | | | | | 0.1 |
| | KF945 | | | 0.2 | | | | | | | | |
| | KF6015 | | | | 0.2 | | | | | | | |
| | KF6204 | | | | | 0.2 | | | | | | |
| | BYK348 | | | | | | 0.2 | | | | | |
| | KF642 | | | | | | | 0.2 | | | | |
| | KF640 | | | | | | | | 0.2 | | | |
| | AE200 | | | | | | | | | | | 0.1 |
| | KF354L | | | | | | | | | | | |
| | Emulgen 105 | | | | | | | | | | | |
| | Megafac F-444 | | | | | | | | | | | |
| Water-soluble organic solvent | Ethylene glycol | 10 | 10 | 10 | 10 | 10 | 10 | 10 | 10 | 10 | 5 | 10 |
| | Glycerin | | | | | | | | | | 5 | |
| Ion exchanged water | | Balance | Balance | Balance | Balance | Balance | Balance | Balance | Balance | Balance | Balance | Balance |

### [Table 4]

**Table 4**

| Comparative Example No. | | 1 | 2 | 3 | 4 | 5 | 6 |
|---|---|---|---|---|---|---|---|
| Ink No. | | 24 | 25 | 26 | 27 | 28 | 29 |
| Gold nanorods dispersion liquid | Dispersion liquid A | | | | | | |
| | Dispersion liquid B | | | | | | |
| | Dispersion liquid C | | | | | | |
| | Dispersion liquid D | | | | | | |
| | Dispersion liquid E | | | | | | |
| | Dispersion liquid F | | | 29 | 29 | 29 | 29 |
| | Dispersion liquid G | | | | | | |
| | Dispersion liquid H | | | | | | |
| | Dispersion liquid I | 6 | | | | | |
| | Dispersion liquid J | | 6 | | | | |
| Surfactant | AE60 | 0.2 | 0.2 | | | | |
| | AE40 | | | | | | |
| | AE100 | | | | | | |
| | KF945 | | | | | | |
| | KF6015 | | | | | | |
| | KF6204 | | | | | | |
| | BYK348 | | | | | | |
| | KF642 | | | | | | |
| | KF640 | | | | | | |
| | AE200 | | | 0.2 | | | |
| | KF354L | | | | 0.2 | | |
| | Emulgen 105 | | | | | 0.2 | |
| | Megafac F-444 | | | | | | 0.2 |
| Water-soluble organic solvent | Ethylene glycol | 10 | 10 | 10 | 10 | 10 | 10 |
| | Glycerin | | | | | | |
| Ion exchanged water | | Balance | Balance | Balance | Balance | Balance | Balance |

### <Example 1>

### <Evaluation of Image Quality in Near-Infrared Region>

A material printer (trade name: DMP-2850, manufactured by Fujifilm), which is an ink jet recording apparatus, was
used as the image recording apparatus. Images were output to output media, PET films having an ink-receiving layer (trade name: CG3110, manufactured by 3M), under the environment of 25°C in temperature and 60% in relative humidity. A 2 cm × 3 cm rectangular solid image with a resolution of 1270 dpi was formed at an ejection amount of 7.5 pL and an application rate of Ink 1 of 1.9 mg/cm², thus obtaining an evaluation image.

Then, a light source 202 and a camera 203 were set as illustrated in Fig. 1, and the evaluation image 201 was observed. More specifically, the evaluation image was placed on a table and irradiated with infrared light of the light source 202 from a distance of approximately 1 m at an angle of 15°. Also, the evaluation image was photographed with the camera 203 placed 15 cm directly above the evaluation image. A halogen lamp light source (trade name: PCS-UHX-150, manufactured by Nippon P·I) with a visible light cut filter unit attached was used as the light source 202. Also, a near-infrared camera (trade name: NVU3VD, InGaAs camera, manufactured by IRspec) provided with a filter that cuts wavelength components of 800 nm or less at the lens portion was used as the camera 203. The near-infrared camera had spectral sensitivity in the wavelength range of 970 nm to 1650 nm.

### <Evaluation of invisibility in visible light Region>

### <Measurement Method of Optical Absorptance in Wavelength Range of 400 nm to 800 nm>

A sample image was obtained by forming a 2 cm × 3 cm rectangular image at an application rate of Ink 1 of 1.9 mg/cm², using the above-described image recording apparatus and PET film.

The sample image was subjected to spectral analysis measurements at wavelengths in the range of 400 nm to 800 nm with a photometer, and the maximum absorptance of the measurements was taken as the measured value (%) of the sample image. A UV-visible-near-infrared spectrophotometer (trade name: UV-3600, manufactured by Shimadzu Corporation) was used as the photometer. A PET film alone (PET film with no images formed) was also subjected to spectral analysis measurements as the blank.

The measured value was taken as the visible light absorptance (%), which was used to evaluate the invisibility of the ink. The result is presented in Table 5. When an image with a visible light absorptance of 13% was visually observed, the image was usable as an invisible image.

### <Evaluation of Readability in Near-Infrared Region>

### <Measurement Method of Optical Absorptance in Wavelength Range of 900 nm to 1800 nm>

The sample image used in the invisibility evaluation was subjected to spectral analysis measurements at wavelengths in the range of 900 nm to 1800 nm with a UV-visible-near-infrared spectrophotometer (trade name: UV-3600, manufactured by Shimadzu Corporation). The maximum absorptance of the measurements was taken as the near-infrared absorptance (%) of the sample. A PET film alone was also subjected to spectral analysis measurements as the blank. The result is presented in Table 5. When an image with a near-infrared absorptance of 5% was examined with the above-described camera, the image was to the extent that it was readable as an invisible image. In contrast, when an image with a near-infrared absorptance of 2% was examined with the same camera, the image was determined to be below the readable level as an invisible image.

### <Evaluation of Storage Stability of Ink>

A 180 mL glass airtight container was charged with 100 g of ink, closed, and stored in an oven at a temperature of 60°C. Then, the ink was visually observed 3 days, 6 days, and 7 days after storage to evaluate the storage stability of the ink according to the following evaluation criteria:
A: The appearance of the ink did not change until 7 days after storage.
B: The appearance of the ink did not change until 6 days after storage, but the ink color gradually darkened from the top to the bottom of the container 7 days after storage.
C: The ink color gradually darkened from the top to the bottom of the container 3 days after storage.
D: Sediment was observed in the container 3 days after storage.

### <Examples 2 to 23 and Comparative Examples 1 to 6>

Evaluations were performed as in Example 1, as presented in Table 5, except that Inks 2 to 29 were substituted for Ink 1. The results are presented in Table 5.

### [Table 5]

**Table 5**

| | | Visible light absorptance | Near-infrared absorptance | Storage stability |
|---|---|---|---|---|
| Example 1 | Ink 1 | 9% | 19% | A |
| Example 2 | Ink 2 | 6% | 23% | A |
| Example 3 | Ink 3 | 5% | 11% | A |
| Example 4 | Ink 4 | 8% | 19% | A |
| Example 5 | Ink 5 | 3% | 17% | A |
| Example 6 | Ink 6 | 4% | 23% | A |
| Example 7 | Ink 7 | 4% | 20% | A |
| Example 8 | Ink 8 | 3% | 19% | A |
| Example 9 | Ink 9 | 2% | 9% | A |
| Example 10 | Ink 10 | 1% | 5% | A |
| Example 11 | Ink 11 | 12% | 81% | A |
| Example 12 | Ink 12 | 13% | 98% | A |
| Example 13 | Ink 13 | 4% | 23% | A |
| Example 14 | Ink 14 | 4% | 23% | C |
| Example 15 | Ink 15 | 4% | 23% | A |
| Example 16 | Ink 16 | 4% | 23% | A |
| Example 17 | Ink 17 | 4% | 23% | A |
| Example 18 | Ink 18 | 4% | 23% | A |
| Example 19 | Ink 19 | 4% | 23% | A |
| Example 20 | Ink 20 | 4% | 23% | B |
| Example 21 | Ink 21 | 4% | 23% | B |
| Example 22 | Ink 22 | 4% | 23% | A |
| Example 23 | Ink 23 | 4% | 23% | A |
| Comparative Example 1 | Ink 24 | 1% | 1% | D |
| Comparative Example 2 | Ink 25 | 0% | 2% | D |
| Comparative Example 3 | Ink 26 | 4% | 23% | D |
| Comparative Example 4 | Ink 27 | 4% | 23% | D |
| Comparative Example 5 | Ink 28 | 4% | 23% | D |
| Comparative Example 6 | Ink 29 | 4% | 23% | D |

The present invention is not limited to the above-described embodiments, and various modifications and changes may be made without departing from the spirit and scope of the invention. Accordingly, the claims will be appended below to make public the scope of the invention.

This application claims the benefit of Japanese Patent Application No. 2021-175756 filed October 27, 2021.

## Claims

1. An ink comprising: water; gold nanorods; and at least one surfactant selected from the group consisting of acetylene glycol-based surfactants with an HLB value of 15 or less and silicone surfactants with an HLB value of 15 or less,
wherein when the aspect ratio distribution of the gold nanorods contained in the ink is measured,
the aspect ratio distribution has an average µ of 6.0 to 13.0; and
the aspect ratio distribution has a standard deviation σ of 0.5 to 4.5.

2. The ink according to Claim 1, wherein the average µ is 7.0 to 12.0, and the standard deviation σ is 0.5 to 3.5.

3. The ink according to Claim 1 or 2, wherein the average µ is 8.0 to 11.0, and the standard deviation σ is 0.5 to 2.5.

4. The ink according to any one of Claims 1 to 3, wherein the gold nanorod content of the ink is 0.005% to 0.150% by mass relative to the total mass of the ink.

5. The ink according to any one of Claims 1 to 4, wherein the gold nanorods contained in the ink have longer axes with an average length of 50 nm to 110 nm.

6. The ink according to any one of Claims 1 to 5, wherein the amount of gold nanoparticles with an aspect ratio of less than 1.5 in the ink is 30% by number or less relative to the number of gold nanorods.

7. The ink according to any one of Claims 1 to 6, wherein the amount of gold nanoparticles with an aspect ratio of less than 1.5 in the ink is 10% by number or less relative to the number of gold nanorods.

8. The ink according to any one of Claims 1 to 7, wherein the gold nanorods are protected by CTAB.

9. The ink according to any one of Claims 1 to 8, wherein the amount of the surfactant in the ink is 0.01% to 1% by mass relative to the total mass of the ink.

10. The ink according to any one of Claims 1 to 9, wherein the amount of the surfactant in the ink is 0.05% to 0.5% by mass relative to the total mass of the ink.

11. The ink according to any one of Claims 1 to 10, wherein the surfactant in the ink has an HLB value of 5 or more.

12. The ink according to any one of Claims 1 to 11, wherein when an image formed with the ink at an application rate of 1.9 mg/cm² is subjected to spectral analysis, the image exhibits a maximum optical absorptance of 10% or less in a wavelength range of 400 nm to 800 nm.

13. The ink according to any one of Claims 1 to 12, wherein when an image formed with the ink at an application rate of 1.9 mg/cm² is subjected to spectral analysis, the image exhibits a maximum optical absorptance of 5% or more in a wavelength range of 900 nm to 1800 nm.

14. The ink according to any one of Claims 1 to 13, wherein the ink is for forming invisible images.

15. A method for reading images, comprising:
reading an image formed with an ink with a device including a near-infrared sensor, the ink being as set forth in any one of Claims 1 to 14.

## Patentansprüche

1. Tinte, umfassend: Wasser; Gold-Nanostäbchen; und mindestens ein oberflächenaktives Mittel, ausgewählt aus einer Gruppe aus oberflächenaktiven Mitteln auf Basis von Acetylenglycol mit einem HLB-Wert von 15 oder weniger und oberflächenaktiven Mitteln auf Silikonbasis mit einem HLB-Wert von 15 oder weniger,
wobei, wenn die Seitenverhältnisverteilung der Gold-Nanostäbchen, die in der Tinte enthalten sind, gemessen wird,
die Seitenverhältnisverteilung einen Mittelwert µ von 6,0 bis 13,0 aufweist; und
die Seitenverhältnisverteilung eine Standardabweichung σ von 0,5 bis 4,5 aufweist.

2. Tinte nach Anspruch 1, wobei der Mittelwert µ 7,0 bis 12,0 beträgt und die Standardabweichung σ 0,5 bis 3,5 beträgt.

3. Tinte nach Anspruch 1 oder 2, wobei der Mittelwert µ 8,0 bis 11,0 beträgt und die Standardabweichung σ 0,5 bis 2,5 beträgt.

4. Tinte nach einem der Ansprüche 1 bis 3, wobei der Gehalt an Gold-Nanostäbchen der Tinte 0,005 Masse-% bis 0,150 Masse-%, bezogen auf die Gesamtmasse der Tinte, beträgt.

5. Tinte nach einem der Ansprüche 1 bis 4, wobei die Gold-Nanostäbchen, die in der Tinte enthalten sind, längere Achsen mit einer durchschnittlichen Länge von 50 nm bis 110 nm aufweisen.

6. Tinte nach einem der Ansprüche 1 bis 5, wobei die Menge an Gold-Nanoteilchen mit einem Seitenverhältnis von weniger als 1,5 in der Tinte 30 Anzahl-% oder weniger, bezogen auf die Anzahl der Gold-Nanostäbchen, beträgt.

7. Tinte nach einem der Ansprüche 1 bis 6, wobei die Menge an Gold-Nanoteilchen mit einem Seitenverhältnis von weniger als 1,5 in der Tinte 10 Anzahl-% oder weniger, bezogen auf die Anzahl der Gold-Nanostäbchen, beträgt.

8. Tinte nach einem der Ansprüche 1 bis 7, wobei die Gold-Nanostäbchen durch CTAB geschützt sind.

9. Tinte nach einem der Ansprüche 1 bis 8, wobei die Menge des oberflächenaktiven Mittels in der Tinte 0,01 Masse-% bis 1 Masse-%, bezogen auf die Gesamtmasse der Tinte, beträgt.

10. Tinte nach einem der Ansprüche 1 bis 9, wobei die Menge des oberflächenaktiven Mittels in der Tinte 0,05 Masse-% bis 0,5 Masse-%, bezogen auf die Gesamtmasse der Tinte, beträgt.

11. Tinte nach einem der Ansprüche 1 bis 10, wobei das oberflächenaktive Mittel in der Tinte einen HLB-Wert von 5 oder mehr aufweist.

12. Tinte nach einem der Ansprüche 1 bis 11, wobei, wenn ein Bild, das mit der Tinte mit einer Auftragsrate von 1,9 mg/cm² erzeugt wird, einer Spektralanalyse unterzogen wird, das Bild eine maximale optische Absorption von 10 % oder weniger in einem Wellenlängenbereich von 400 nm bis 800 nm aufweist.

13. Tinte nach einem der Ansprüche 1 bis 12, wobei, wenn ein Bild, das mit der Tinte mit einer Auftragsrate von 1,9 mg/cm² erzeugt wird, einer Spektralanalyse unterzogen wird, das Bild eine maximale optische Absorption von 5 % oder mehr in einem Wellenlängenbereich von 900 nm bis 1800 nm aufweist.

14. Tinte nach einem der Ansprüche 1 bis 13, wobei die Tinte zum Erzeugen unsichtbarer Bilder dient.

15. Verfahren zum Lesen von Bildern, umfassend:
Lesen eines Bildes, das mit einer Tinte erzeugt wurde, mit einer Vorrichtung, die einen Nahinfrarotsensor enthält, wobei die Tinte wie in einem der Ansprüche 1 bis 14 dargelegt ist.

## Revendications

1. Encre comprenant : de l'eau ; des nanotiges d'or ; et au moins un tensioactif choisi dans le groupe consistant en des tensioactifs à base d'acétylène glycol ayant une valeur HLB de 15 ou moins et des tensioactifs de silicone ayant une valeur HLB de 15 ou moins,
dans laquelle lorsque la distribution de rapport d'aspect des nanotiges d'or contenues dans l'encre est mesurée,
la distribution de rapport d'aspect présente une moyenne µ de 6,0 à 13,0 ; et
la distribution de rapport d'aspect présente un écart-type σ de 0,5 à 4,5.

2. Encre selon la revendication 1, dans laquelle la moyenne µ est de 7,0 à 12,0, et l'écart-type σ est de 0,5 à 3,5.

3. Encre selon la revendication 1 ou 2, dans laquelle la moyenne µ est de 8,0 à 11,0, et l'écart-type σ est de 0,5 à 2,5.

4. Encre selon l'une quelconque des revendications 1 à 3, dans laquelle la teneur en nanotiges d'or de l'encre est de 0,005 % à 0,150 % en masse par rapport à la masse totale de l'encre.

5. Encre selon l'une quelconque des revendications 1 à 4, dans laquelle les nanotiges d'or contenues dans l'encre ont des axes plus longs d'une longueur moyenne de 50 nm à 110 nm.

6. Encre selon l'une quelconque des revendications 1 à 5, dans laquelle la quantité de nanoparticules d'or ayant un rapport d'aspect inférieur à 1,5 dans l'encre est de 30 % en nombre ou moins par rapport au nombre de nanotiges d'or.

7. Encre selon l'une quelconque des revendications 1 à 6, dans laquelle la quantité de nanoparticules d'or ayant un rapport d'aspect inférieur à 1,5 dans l'encre est de 10 % en nombre ou moins par rapport au nombre de nanotiges d'or.

8. Encre selon l'une quelconque des revendications 1 à 7, dans laquelle les nanotiges d'or sont protégées par CTAB.

9. Encre selon l'une quelconque des revendications 1 à 8, dans laquelle la quantité du tensioactif dans l'encre est de 0,01 % à 1 % en masse par rapport à la masse totale de l'encre.

10. Encre selon l'une quelconque des revendications 1 à 9, dans laquelle la quantité du tensioactif dans l'encre est de 0,05 % à 0,5 % en masse par rapport à la masse totale de l'encre.

11. Encre selon l'une quelconque des revendications 1 à 10, dans laquelle le tensioactif dans l'encre a une valeur HLB de 5 ou plus.

12. Encre selon l'une quelconque des revendications 1 à 11, dans laquelle lorsqu'une image formée avec l'encre à un taux d'application de 1,9 mg/cm² est soumise à une analyse spectrale, l'image affiche un pouvoir d'absorption optique maximal de 10 % ou moins dans une plage de longueur d'onde de 400 nm à 800 nm.

13. Encre selon l'une quelconque des revendications 1 à 12, dans laquelle lorsqu'une image formée avec l'encre à un taux d'application de 1,9 mg/cm² est soumise à une analyse spectrale, l'image affiche un pouvoir d'absorption optique maximal de 5 % ou plus dans une plage de longueur d'onde de 900 nm à 1 800 nm.

14. Encre selon l'une quelconque des revendications 1 à 13, dans laquelle l'encre est destinée à former des images invisibles.

15. Procédé de lecture d'images, comprenant :
la lecture d'une image formée avec une encre au moyen d'un dispositif comportant un capteur proche infrarouge, l'encre étant telle qu'établie dans l'une quelconque des revendications 1 à 14.
